# EUROPÄISCHE PATENTSCHRIFT

(11) **EP 0 842 814 B1**
(45) Veröffentlichungstag und Bekanntmachung des Hinweises auf die Patenterteilung: **06.03.2002**
(21) Anmeldenummer: 97119970.8
(22) Anmeldetag: 14.11.1997
(51) Int. Cl.: B60N 2/48

(54) **Kopfstütze für Fahrzeugsitze**
Headrest for vehicle seats.
Appui-tête pour sièges de véhicules.

(30) Priorität: 15.11.1996 DE 19647359
(43) Veröffentlichungstag der Anmeldung: 20.05.1998
(73) Patentinhaber: GRAMMER Automotive GmbH, 92224 Amberg (DE)
(72) Erfinder: Wege, Lutz, 42657 Solingen (DE); Pausch, Friedhelm, 42697 Solingen (DE); Stylec, Martin, 42799 Leichlingen (DE)
(74) Vertreter: Patentanwälte Ostriga & Sonnet

(56) Entgegenhaltungen:
- EP-A- 0 594 527
- EP-A- 0 730 993
- DE-A- 4 042 034
- DE-C- 4 228 849
- GB-A- 2 085 719

## Beschreibung

Die Erfindung betrifft eine Kopfstütze für Fahrzeugsitze entsprechend dem Oberbegriff des Anspruchs 1.

Kopfstützen vorbezeichneter Art sind beispielsweise durch die DE 40 42 034 A1 bekannt.

Die bekannte Kopfstütze ist an einer Sitzlehne angeordnet, die mittels eines Sitzlehnen-Schwenkbeschlages schwenkbar an einem Fahrzeugsitz gehalten ist. Dabei sind die dem Kopfkasten zugeordneten Tragstangen (Halteelemente) um eine sich quer zur Fahrtrichtung erstreckende Neigeachse einer Kopfstützen-Neigemechanik schwenkbar. Auf diese Weise ist es möglich, die kopfpolsterseitige Kopfanlagefläche dem Kopf des Fahrzeuginsassen anzunähern.

Bei der bekannten Kopfstütze ist es demnach vorteilhaft, daß bei einer Sitzlehnenverschwenkung nach hinten der ergonomisch bedingt zunehmend größer werdende Abstand zwischen kopfpolsterseitiger Kopfanlagefläche und dem Kopf des Fahrzeuginsassen dadurch ausgeglichen werden kann, daß eine sitzlehnenseitige Neigeverstellung der Kopfstütze nach vorn vorgenommen wird. Hierbei erfolgt die sitzlehnenseitige Neigeverstellung der Kopfstütze willkürlich über eine Tastatur elektropneumatisch.

In der EP 0 594 527 A ist die Struktur eines Fahrzeugsitzes mit einer schwenkbaren Sitzlehne beschrieben, welche aus einem Sitzlehnenunterteil und aus einem Sitzlehnenoberteil zusammengesetzt ist. Der obere Bereich des Sitzlehnenoberteils bildet eine Anlehnfläche für den Kopf eines Fahrgastes. Sitzlehnenunterteil und Sitzlehnenoberteil sind gegeneinander verschwenkbar und mittels eines Lenkergetriebes miteinander verbunden. Sobald das Sitzlehnenunterteil nach hinten schwenkt, schwenkt das Sitzlehnenoberteil relativ zum Sitzlehnenunterteil nach vorn und umgekehrt.

Die GB 2 085 719 A betrifft einen Bürostuhl mit einer ein Rückenlehnenunterteil und ein Rückenlehnenoberteil aufweisenden Rükkenlehne. Das Rückenlehnenunterteil ist über ein Gelenk mit dem Sitzteil verbunden, während das Rückenlehnenoberteil über ein Gelenk mit dem Rückenlehnenunterteil verbunden ist. Ein Lenkergetriebe bewirkt, daß sich das Sitzlehnenoberteil nach hinten bewegt, wenn sich das Sitzlehnenunterteil nach vorn bewegt, und umgekehrt.

Ausgehend von der bekannten Kopfstütze gemäß der DE 40 42 034 A1, die als der nächste Stand der Technik angesehen wird, liegt der Erfindung die Aufgabe zugrunde, die bekannte Kopfstütze hinsichtlich ihrer Sicherheits- und Bedienungseigenschaften weiterzuentwickeln.

Entsprechend der Erfindung wird diese Aufgabe dadurch gelöst, daß die Kopfstützen-Neigemechanik mit dem Sitzlehnen-Schwenkbeschlag bezüglich dessen Schwenkrichtung gegensinnig neigeverstellbar antriebsverbunden ist, und daß zwischen dem Sitzlehnen-Schwenkbeschlag und einer Höhenverstellmechanik der Kopfstütze eine zwangsweise Antriebsverbindung besteht, welche bei einer Verschwenkung der Sitzlehne nach hinten die Kopfstütze aus der Sitzlehne herausfährt und bei einer Verschwenkung der Sitzlehne nach vorn die Kopfstütze in die Sitzlehne einfährt.

Mit der Erfindung ist der Vorteil erzielt worden, daß innerhalb üblicher Sitzlehnenschwenkpositionen in einem bestimmten Sitzlehnenschwenkbereich, z.B. bei einer Schwenkbewegung der Sitzlehne nach hinten, die Kopfstütze um ein solches Maß nach vorn geneigt wird, daß der ohne diese Erfindungsmaßnahme zu große Abstand zwischen der kopfpolsterseitigen Kopfanlagefläche und dem Kopf des Fahrzeuginsassen weitestgehend ausgeglichen wird.

Wenn umgekehrt eine Verschwenkung der Sitzlehne nach vorn erfolgt und dadurch die Vorwärtsverlagerung der Kopfstütze in ergonomischer Hinsicht zu groß wäre, bewirkt die Vorwärtsschwenkung der Sitzlehne eine umgekehrte Neigeverstellung der Kopfstütze, d.h. die Kopfstütze schwenkt um das ergonomisch erforderliche Maß nach hinten weg.

Weiterhin beabsichtigt die Erfindung zusätzlich zur vorbeschriebenen Schwenk- und Gegenschwenkbewegung (Gegenneigebewegung) zwischen Sitzlehne und Kopfstütze eine zwangsweise Antriebsverbindung zur Kopfstütze derart, daß diese relativ zur Sitzlehne ausgefahren wird, wenn letztere nach hinten geschwenkt wird, und daß die Kopfstützentragstangen (Halteelemente) um ein gewisses Maß in die Sitzlehne eingefahren werden, wenn die Sitzlehne nach vorn geschwenkt wird. Die letztgenannte zusätzliche zwangsweise Bewegungskupplung in Abhängigkeit von der Sitzlehnenverschwenkung bewirkt einen Ausgleich der durch die Sitzlehnenverschwenkung hervorgerufenen Höhendifferenz zwischen der Kopfstütze und dem Kopf des Fahrzeuginsassen.

Die Antriebsverbindung der Mechanik des Sitzlehnenbeschlages mit der Neigemechanik der Tragstangen (Halteelemente) kann auf unterschiedliche Art erfolgen. So kann ein sitzlehnenseitiges Verstellrad über ein mechanisches Getriebe mit der Neigemechanik der Kopfpolstertragstangen (Halteelemente) antriebsgekuppelt sein. Das Antriebsmittel kann beispielsweise ein Zahnriementrieb oder eine biegsame Welle sein.

Auch ist es möglich, einen der Neigemechanik der Tragstangen (Halteelemente) zugeordneten elektrischen, pneumatischen oder hydraulischen Verstellmotor über eine dem Antriebsmedium entsprechende Verbindungsleitung mit der Verstelleinheit des Sitzlehnenbeschlages, z.B. unter Einschaltung eines Servo-Gliedes, zu koppeln.

Soweit mechanische Getriebeteile verwendet werden und es sich dabei um Zahnrädergetriebe handelt, hat es sich als zweckmäßig erwiesen, selbsthemmende Zahntriebe zu verwenden, beispielsweise Schneckengetriebe.

Eine vorteilhafte erfindungsgemäße Ausführungsform besteht darin, daß die Längskrümmung jedes Halteelements (Kopfpolstertragstange z.B.) innerhalb ihrer sitzlehnenseitigen Führung so ausgebildet ist, daß bei einer Ausfahr- oder Einfahrbewegung der Kopfstütze, bedingt durch eine Höhenverlagerung der Neigeachse der Tragstangen, zugleich eine Vorwärtsschwenkung oder eine Rückwärtsschwenkung der Halteelemente durch ein Ausgleichselement erfolgen kann. Dieses Ausgleichselement kann beispielsweise aus einer Kulissenanordnung bestehen.

Weitere Erfindungsmerkmale sind zusätzlichen Unteransprüchen zu entnehmen.

In den Zeichnungen sind bevorzugte Auführungsbeispiele entsprechend der Erfindung näher dargestellt, es zeigt,
Fig. 1 eine schematische Funktionsdarstellung anhand einer zum Teil geschnittenen Seitenansicht einer Kopfstützenanordnung und
Fig. 2 eine schematische Ansicht des in Fig. 1 nur mit dem oberen Bereich seiner Sitzlehne gezeigten Fahrzeugsitzes, bei welchem ein Teil der Sitzlehne herausgebrochen dargestellt ist, um die Antriebsverbindung zur Kopfstütze anzudeuten.

In den Zeichnungen ist eine Fahrzeug-Kopfstütze allgemein mit der Bezugsziffer 10 bezeichnet.

Die Kopfstütze 10 weist mindestens ein Halteelement in Form einer Kopfstützen-Tragstange 11 auf. Beim dargestellten Beispiel sind zwei Tragstangen 11 vorhanden, von denen nur eine sichtbar ist.

Jede Tragstange 11 erstreckt sich in ihrem Längsverlauf entlang einer gekrümmt verlaufenden Bahnkurve B, deren konkave Seite in Fahrtrichtung x nach vorn weist.

Außerdem weist die Kopfstütze 10 einen Kopfkasten 12 auf, welcher von einem Kopfpolster 13 umhüllt ist.

Der Kopfkasten 12 enthält eine insgesamt mit 14 bezeichnete kopfkasteninterne Höhenverstellung, welche entsprechend der EP 0 730 993 A1 ausgebildet ist.

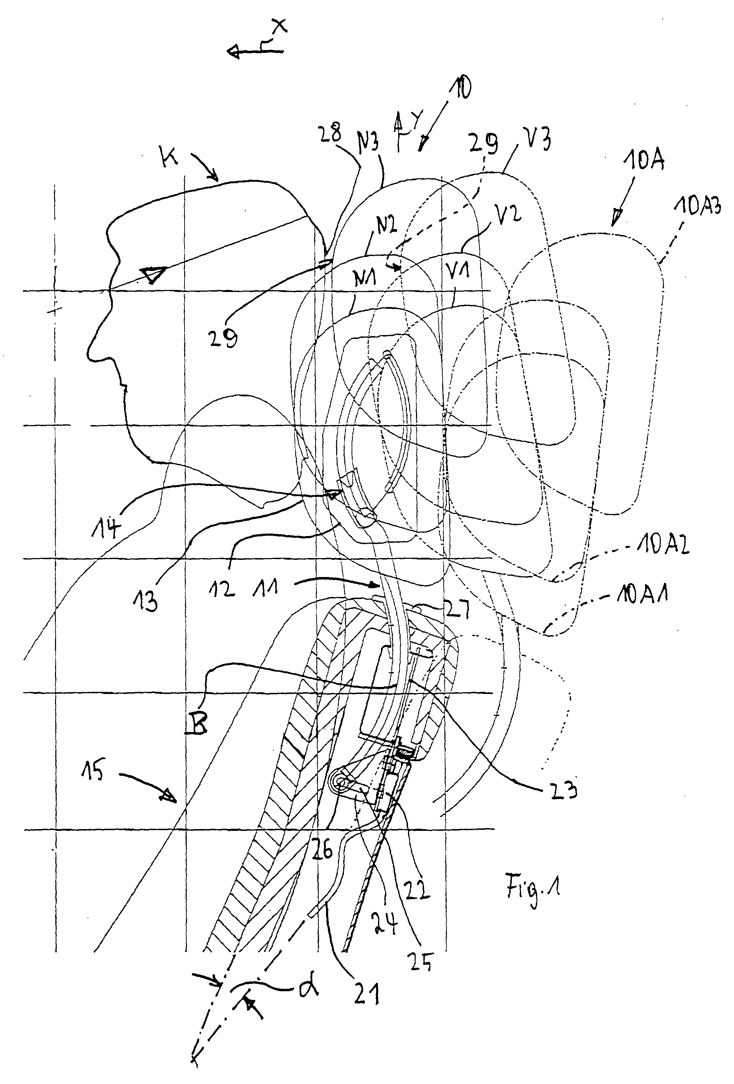

In Fig. 1 sind mehrere Kopfstützenpositionen einander überlagernd in unterschiedlicher Weise dargestellt.

Dabei ist die mit durchgezogenen Linien dargestellte Kopfstütze 10 bei derselben Normalschwenkposition der Sitzlehne 15 (ebenfalls mit durchgezogenen Linien dargestellt) in drei verschiedenen Höhenlagen N1, N2 und N3 gezeigt.

Sobald die Sitzlehne um den Schwenkverstellwinkel α nach hinten verschwenkt ist, ergibt sich die in punktierten Linien ausgeführte Darstellung mit den unterschiedlichen Höhenlagen V1, V2 und V3 der Kopfstütze 10.

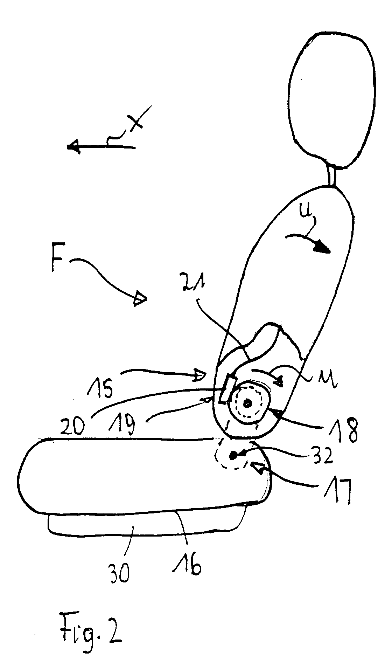

In Fig. 2 ist eine Sitzkonsole 30 mit einem Sitzpolster 16 eines insgesamt mit F bezeichneten Fahrzeugsitzes zu sehen. An der Sitzkonsole 30 ist mittels eines gestrichelt dargestellten Sitzlehnen-Schwenkbeschlages 17 die Sitzlehne 15 schwenkbar angelenkt.

Die Sitzlehne 15 ist auch in eine horizontale Schwenklage zu versetzen (Liegesitzfunktion). Zur Darstellung der erfindungsgemäßen Funktion soll jedoch nur der während der Fahrt einzunehmende normale Schwenkverstellbereich α der Sitzlehne 15 betrachtet werden, der insgesamt etwa 35° beträgt. Und zwar befindet sich die Normallage um 25° zurückgeschwenkt von der Vertikalen und die extreme Schwenklage, bei der noch gerade eine Fahrposition eingenommen werden kann, bei etwa 45° Rückwärtsschwenkung bezüglich der Vertikalen. Die steilste Sitzlehnenneigung beträgt etwa 10° rückwärts von der Vertikalen.

In der konkret in Fig. 1 durchgezogen gezeichneten Stellung der stufenlos höhenverstellbaren Kopfstütze 10 nimmt diese die drei dargestellen Höhenlagen N1, N2, und N3 unter Berücksichtigung einer Ausgleichsbewegung gemäß der EP 0 730 993 A1 ein. Hierbei entspricht die Höhenlage N1 einem kleinen, die Höhenlage N2 einem mittelgroßen und die Höhenlage N3 einem großen Fahrzeuginsassen.

Wenn das Handrand (Verstellrad) 18 des Sitzlehnen-Schwenkbeschlages 17 in Drehrichtung u verschwenkt wird, schwenkt die Sitzlehne 15 ebenfalls in Schwenkrichtung u, und zwar nach hinten. Dadurch wird eine Getriebeeinheit 19 mittels eines Schneckenrades 20 bewegt. Mit dem Schneckenrad 20 ist eine biegsame Welle 21 drehverbunden, deren Abtriebsseite wiederum mit einer Getriebeeinheit 22 bewegungsgekuppelt ist. Die Getriebeeinheit 22 kann ebenfalls ein Schneckerad enthalten, welches sich mit einer translatorisch höhenverstellbaren Zahnstange 23 in Eingriff befindet.

Die Zahnstange 23 ist in nicht näher gezeigter Weise in der Sitzlehnenkonstruktion geführt. Mit der Zahnstange 23 fest und ebenfalls translatorisch höhenbeweglich verbunden ist eine Verstellkonsole 24, die einen Kulissenschlitz 25 enthält, in welcher eine Kopfstützen-Neigeachse 26, die am unteren freien Ende der Tragstangen 11 angeordnet ist, nach Art eines Kulissensteins nach vorn in Fahrtrichtung x und entgegengesetzt verstellbar gelagert ist.

Mit Drehung des Handrades 18 in Drehrichtung u wird auf Grund der vorbeschriebenen Anordnung nicht nur die Sitzlehne 15 in Richtung u rückwärts geschwenkt, sondern die Getriebeeinheit 22 greift derart in die Zahnstange 23 ein, daß letztere synchron mit der nach hinten gerichteten Sitzlehnenschwenkung nach oben in Richtung y verstellt wird.

Dabei erzwingt die Kulissenanordnung 25, 26 in Verbindung mit der Bahnkurve B und einer entsprechenden Führung der Tragstangen 11 innerhalb einer Sitzhülse 27 eine Ausgleichsbewegung des oberen Bereichs der Tragstangen 11 einschließlich des von ihnen getragenen Kopfkastens 12 nach vorn und nach oben.

Die Darstellung N3 der Kopfstütze 10 bezieht sich in etwa auf eine große Person, bei welcher sich der höchste Punkt des Kopfes K etwa mit der höchsten Stelle der Kopfstütze 10 in derselben Höhe befindet.

Zusammengefaßt ist festzustellen, daß bei einer Sitzlehnenschwenkverstellung, z.B. nach hinten in Richtung u, eine eine Höhendifferenz ausgleichende Ausfahrbewegung der Tragstangen 11 nach oben in Richtung y und zugleich eine Ausgleichsbewegung des Kopfkastens 12 nach vorn in Richtung x erfolgt. In allen Verstellagen der Kopfstütze 10, beim gezeichneten Beispiel bezogen auf den konkret dargestellten Fahrzeuginsassen mit Kopf K, befindet sich die kopfseitige Anlehnfläche 28 stets in einem Abstand, der nie größer ist als etwa 40 mm von der kopfpolsterseitigen Kopfanlehnfläche 29.

Wird der vorerwähnte, während der Fahrt einzunehmende normale Schwenkbereich α von etwa 35° der Sitzlehne 15 überschritten, kann es zweckmäßig sein, sodann die erfindungsgemäße Antriebsverbindung zwischen Sitzlehnen- und Tragstangenverschwenkung über ein Steuerungs- oder Kupplungsmittel abzukuppeln, was auch selbsttätig geschehen kann.

Tragstangen an sich zur Halterung der Kopfstütze an der Sitzlehne sind nicht obligatorisch. Vielmehr umfaßt die Erfindung unter Einbeziehung der Antriebsverbindung auch andere Halterungsmittel, die es gestatten, die Kopfstütze relativ zur Sitzlehne nach vorn und hinten und gegebenenfalls zusätzlich nach oben und unten zu bewegen.

In Fig. 1 ist noch der Unterschied einer erfindungsgemäßen Kopfstützenanordnung zum Stand der Technik dargestellt. Dabei ist eine Kopfstütze entsprechend dem Stand der Technik mit der Bezugsziffer 10A in drei unterschiedlichen Höhenlagen 10A1, 10A2 und 10A3 mit strichpunktierten Linien dargestellt. Die Kopfstützenpostionen 10A1, 10A2 und 10A3 zeigen eine Kopfstütze, bei welcher keine Bewegungskupplung zwischen der sitzlehnenseitigen Schwenkverstellung und der Neige- bzw. Höhenverstellung der Kopfstütze 10A vorhanden ist. Demnach ist mit einer bekannten Kopfstütze 10A keine hinreichend kleine Annäherung der kopfpolsterseitigen Kopfanlagefläche 29 an die kopfseitige Anlehnfläche 28 möglich. Diese Unterschiede werden besonders deutlich, wenn man die Kopfstützenposition V3 der erfindungsgemäßen Kopfstütze 10 mit der Kopfstützenposition 10A3 der bekannten Kopfstütze 10A vergleicht.

## Patentansprüche

1. Kopfstütze (10) für Fahrzeugsitze (F), deren mindestens eines Halteelement (11), wie Tragstange od.dgl., von einer eine horizontale Kopfstützen-Neigeachse (26) aufweisenden Kopfstützen-Neigemechanik innerhalb einer Sitzlehne (15) aufgenommen ist, welche über einen Sitzlehnen-Schwenkbeschlag (17) um eine im wesentlichen horizontale SitzlehnenSchwenkachse (32) verschwenkbar ist, **dadurch gekennzeichnet, daß** die Kopfstützen-Neigemechanik mit dem Sitzlehnen-Schwenkbeschlag (17) bezüglich dessen Schwenkrichtung (z.B. u) gegensinnig neigeverstellbar antriebsverbunden (20, 21, 22) ist, und daß zwischen dem Sitzlehnen-Schwenkbeschlag (17) und einer Höhenverstellmechanik der Kopfstütze (10) eine zwangsweise Antriebsverbindung (20, 21, 22) besteht, welche bei einer Verschwenkung der Sitzlehne (15) nach hinten die Kopfstütze (10) aus der Sitzlehne (15) ausfährt und bei einer Verschwenkung der Sitzlehne (15) nach vorn (bei x) die Kopfstütze (10) in die Sitzlehne (15) einfährt.

2. Kopfstütze nach Anspruch 1, **dadurch gekennzeichnet, daß** die Antriebsverbindung (20, 21, 22) zwischen der Kopfstützen-Neigemechanik und dem Sitzlehnen-Schwenkbeschlag (17) eine Zwangsverbindung bildet.

3. Kopfstütze nach Anspruch 1 oder nach Anspruch 2, **dadurch gekennzeichnet, daß** Kopfstützen-Neigemechänik und Höhenverstellmechanik gemeinsam von einer in der Sitzlehne (15) angeordneten Kopfstützenverstellmechanik gebildet sind.

4. Kopfstütze nach einem der Ansprüche 1 bis 3, **dadurch gekennzeichnet, daß** die Kopfstüzenverstellmechanik eine in der Sitzlehne (15) höhenbeweglich geführte, zugleich die horizontale Kopfstützen-Neigeachse (26) enthaltende, Verstellkonsole (24) aufweist.

5. Kopfstütze nach Anspruch 4, **dadurch gekennzeichnet, daß** mit der Verstellkonsole (24) eine Zahnstange (23) translatorisch höhenbeweglich verbunden ist, mit welcher sich eine mit dem Sitzlehnenbeschlag (17) bewegungsgekuppelte Getriebeeinheit (22) in Eingriff befindet.

6. Kopfstütze nach Anspruch 4 oder nach Anspruch 5, **dadurch gekennzeichnet, daß** die Verstellkonsole (24) einen Kulissenschlitz (25) enthält, in welcher die Kopfstützen-Neigeachse (26) nach Art eines Kulissensteins geführt ist.

7. Kopfststütze nach 6, **dadurch gekennzeichnet, daß** die Kopfstützen-Neigeachse (26) am unteren freien Ende des Halteelements (11) angeordnet ist.

8. Kopfstütze nach einem der Ansprüche 1 bis 7, **dadurch gekennzeichnet, daß** das Halteelement (11) sich in seinem Längsverlauf entlang einer gekrümmt verlaufenden Bahnkurve (B) erstreckt, deren konkave Seite zur kopfseitigen Anlehnfläche (28) des Fahrgastes (bei K), d.h. in Fahrtrichtung (x) nach vorn, weist.

9. Kopststütze nach einem der Ansprüche 1 bis 8, **dadurch gekennzeichnet, daß** das Halteelement (11) innerhalb einer sitzlehnenseitig angeordneten Sitzhülse (27) entlang der Bahnkurve (B) geführt ist.

10. Kopfstütze nach einem der Ansprüche 1 bis 9, **dadurch gekennzeichnet, daß** die Antriebsverbindung (bei 20, 21, 22) zwischen der Kopfstützen-Neigemechanik und dem Sitzlehnen-Schwenkbeschlag (17) auf einen Schwenkbereich (α) beschränkt ist.

11. Kopfstütze nach Anspruch 10, **dadurch gekennzeichnet, daß** der Schwenkbereich (α) etwa 35° beträgt.

12. Kopfstütze nach den Ansprüchen 10 und 11, **dadurch gekennzeichnet, daß** bei Überschreitung des Schwenkbereichs (α) die Antriebsverbindung zwischen dem Sitzlehnen-Schwenkbeschlag (17) und der Kopfstützen-Neigemechanik über ein Steuerungs- oder Kupplungsmittel abzukuppeln ist.

13. Kopfstütze nach Anspruch 12, **dadurch gekennzeichnet, daß** die Abkupplung selbsttätig erfolgt.

14. Kopfstütze nach einem der Ansprüche 1 bis 13, **dadurch gekennzeichnet, daß** ein Verstellrad (18) des Sitzlehnen-Schwenkbeschlages (18) über ein mechanisches Getriebe (bei 20, 21, 22) mit der Kopfstützenverstellmechanik antriebsgekuppelt ist.

15. Kopfstütze nach Anspruch 14, **dadurch gekennzeichnet, daß** das mechanische Getriebe als Antriebsmittel einen Zahnriementrieb enthält.

16. Kopfstütze nach Anspruch 14, **dadurch gekennzeichnet, daß** das mechanische Getriebe als Antriebsmittel eine biegsame Welle enthält.

17. Kopfstütze nach Anspruch 14, **dadurch gekennzeichnet, daß** die Antriebsverbindung zwischen dem Sitzlehnen-Schwenkbeschlag (17) und Kopfstützenverstellmechanik (31) mindestens ein Zahnrädergetriebe (19, 22) enthält.

18. Kopfstütze nach Anspruch 17, **dadurch gekennzeichnet, daß** das Zahnrädergetriebe (19, 22) einen selbsthemmenden Zahntrieb aufweist.

19. Kopfstütze nach Anspruch 18, **dadurch gekennzeichnet, daß** der selbsthemmende Zahntrieb von einem Schneckengetriebe gebildet ist.

## Claims

1. A head rest (10) for vehicle seats (F), whereof at least one holding element (11), such as a supporting rod or the like, is received within a seat back (15) by a head-rest inclination mechanism having a horizontal head-rest inclination pin (26), which seat back may be pivoted about a substantially horizontal seat-back pivot pin (32) by way of a seat-back pivot fitting (17), **characterised in that** there is a driving connection (20, 21, 22) between the head-rest inclination mechanism and the seat-back pivot fitting (17), such that the inclination of the head-rest inclination mechanism may be adjusted (for example) counter-clockwise with respect to the pivoting direction of the seat-back pivot fitting (17), and **in that** there is a forced driving connection (20, 21, 22) between the seat-back pivot fitting (17) and a height-adjusting mechanism for the head rest (10), said driving connection moving the head rest (10) out of the seat back (15) when the seat back (15) pivots backwards, and moving the head rest (10) into the seat back (15) when the seat back (15) pivots forwards (indicated by x).

2. A head rest according to Claim 1, **characterised in that** the driving connection (20, 21, 22) between the head-rest inclination mechanism and the seat-back pivot fitting (17) forms a forced connection.

3. A head rest according to Claim 1 or Claim 2, **characterised in that** the head-rest inclination mechanism and the height-adjusting mechanism are together formed by a head-rest adjusting mechanism arranged in the seat back (15).

4. A head rest according to one of Claims 1 to 3, **characterised in that** the head-rest adjusting mechanism has an adjusting bracket (24) which is guided in vertically movable manner in the seat back (15) and at the same time contains the horizontal head-rest inclination pin (26).

5. A head rest according to Claim 4, **characterised in that** a rack (23) is connected in translatory vertically movable manner to the adjusting bracket (24), a gear unit (22), which is motively coupled to the seat-back fitting (17), being located in engagement with said rack.

6. A head rest according to Claim 4 or Claim 5, **characterised in that** the adjusting bracket (24) contains a link slot (25) in which the head-rest inclination pin (26) is guided in the manner of a link block.

7. A head rest according to Claim 6, **characterised in that** the head-rest inclination pin (26) is arranged at the lower free end of the holding element (11).

8. A head rest according to one of Claims 1 to 7, **characterised in that** the holding element (11) extends in its longitudinal course along an arcuately extending curved path (B), whereof the concave side points towards the head-side supporting face (28) for the passenger (indicated by K), i.e. forwards as seen in the direction of travel (x).

9. A head rest according to one of Claims 1 to 8, **characterised in that** the holding element (11) is guided along the curved path (B) within a seat sleeve (27) arranged on the seat-back side.

10. A head rest according to one of Claims 1 to 9, **characterised in that** the driving connection (indicated by 20, 21, 22) between the head-rest inclination mechanism and the seat-back pivot fitting (17) is restricted to a pivot range (α).

11. A head rest according to Claim 10, **characterised in that** the pivot range (α) is approximately 35°.

12. A head rest according to Claims 10 and 11, **characterised in that**, if the pivot range (α) is exceeded, the driving connection between the seat-back pivot fitting (17) and the head-rest inclination mechanism is to be uncoupled by way of a control or coupling means.

13. A head rest according to Claim 12, **characterised in that** uncoupling is effected automatically.

14. A head rest according to one of Claims 1 to 13, **characterised in that** an adjusting wheel (18) of the seat-back pivot fitting (17) is coupled in driving manner to the head-rest adjusting mechanism by way of a mechanical gearing (indicated by 20, 21, 22).

15. A head rest according to Claim 14, **characterised in that** the mechanical gearing contains a synchronous belt drive as the drive means.

16. A head rest according to Claim 14, **characterised in that** the mechanical gearing contains a flexible shaft as the drive means.

17. A head rest according to Claim 14, **characterised in that** the driving connection between the seat-back pivot fitting (17) and the head-rest adjusting mechanism (31) contains at least one gear train (19, 22).

18. A head rest according to Claim 17, **characterised in that** the gear train (19, 22) has a self-locking pinion.

19. A head rest according to Claim 18, **characterised in that** the self-locking pinion is formed by a worm gear.

## Revendications

1. Appui-tête (10) pour sièges de véhicule (F) dont au moins un élément de maintien (11) tel qu'une barre support ou analogue, est supporté par un mécanisme d'inclinaison d'appui-tête présentant un axe d'inclinaison d'appui-tête (26) horizontal, mécanisme placé à l'intérieur d'un dossier de siège (15), qui est susceptible de pivoter, par l'intermédiaire d'une ferrure pivotante de dossier de siège (17), autour d'un axe de pivotement de dossier de siège (32) sensiblement horizontal, **caractérisé par le fait que** le mécanisme d'inclinaison d'appui est relié à la ferrure de pivotement de dossier de tête (17), en une liaison d'entraînement (20, 21, 22) avec possibilité d'inclinaison en sens inverse concernant son sens de pivotement (par exemple u), et en ce que, entre la ferrure de pivotement de dossier de siège (17) et un mécanisme de réglage de hauteur de l'appui-tête (10), est constituée une liaison d'entraînement (20, 21, 22) forcée qui, lors du pivotement du dossier de siège (15) vers l'arrière, fait sortir l'appui-tête (10) hors du dossier de siège (15) et, lors du pivotement du dossier de siège (15) vers l'avant (en x), fait rentrer l'appui-tête (10) dans le dossier de siège (15).

2. Appui-tête selon la revendication 1, **caractérisé par le fait que** la liaison d'entraînement (20, 21, 22), entre le mécanisme d'inclinaison d'appui-tête et la ferrure de pivotement de dossier de siège (17), forme une liaison forcée.

3. Appui-tête selon la revendication 1 ou selon la revendication 2, **caractérisé par le fait que** le mécanisme d'inclinaison d'appui-tête et le mécanisme de réglage de hauteur sont formés conjointement par un mécanisme de réglage d'appui-tête disposé dans le dossier de siège (15).

4. Appui-tête selon l'une des revendications 1 à 3, **caractérisé par le fait que** le mécanisme de réglage d'appui-tête présente une console de réglage (24) guidée en hauteur dans le dossier de siège (15), contenant en même temps l'axe d'inclinaison d'appui-tête (26) horizontal.

5. Appui-tête selon la revendication 4, **caractérisé par le fait que**, à la console de réglage (24) est reliée, avec une mobilité en hauteur, par translation, une crémaillère (23), avec laquelle une unité de transmission (22), couplée cinématiquement à la ferrure de dossier de siège (17), est mise en prise.

6. Appui-tête selon la revendication 4 ou selon la revendication 5, **caractérisé par le fait que** la console de réglage (24) contient une fente de coulisse (25) dans laquelle l'axe d'inclinaison d'appui-tête (26) est guidé à la façon d'un patin de coulisse.

7. Appui-tête selon la revendication 6, **caractérisé par le fait que** l'axe d'inclinaison d'appui-tête (26) est disposé sur l'extrémité libre inférieure de l'élément de maintien (11).

8. Appui-tête selon l'une des revendications 1 à 7, **caractérisé par le fait que** l'élément de maintien (11) s'étend, quant à son allure longitudinale, le long d'une courbe de piste (B) à allure incurvée, dont la face concave est tournée vers la face d'appui (28), située côté tête, du passager (en K), c'est-à-dire vers l'avant dans la direction de roulage (x).

9. Appui-tête selon l'une des revendications 1 à 8, **caractérisé par le fait que** l'élément de maintien (11) est guidé le long de la courbe de piste (B), à l'intérieur d'une douille de montage (27) disposée du côté du dossier de siège.

10. Appui-tête selon l'une des revendications 1 à 9, **caractérisé par le fait que** la liaison d'entraînement (en 20, 21, 22), entre le mécanisme d'inclinaison d'appui-tête et la ferrure de pivotement de dossier de siège (17), est limitée à une plage de pivotement (α).

11. Appui-tête selon la revendication 10, **caractérisé par le fait que** la plage de pivotement (α) est d'environ 35°.

12. Appui-tête selon les revendications 10 et 11, **caractérisé par le fait que**, en cas de dépassement de la plage de pivotement (α), la liaison d'entraînement ,entre la ferrure de pivotement de dossier de siège (17) et le mécanisme d'inclinaison d'appui-tête, est à désaccoupler par l'intermédiaire d'un moyen de commande ou d'accouplement.

13. Appui-tête selon la revendication 12, **caractérisé par le fait que** le désaccouplement s'effectue automatiquement.

14. Appui-tête selon l'une des revendications 1 à 13, **caractérisé par le fait qu'**une roue de réglage (18) de la ferrure de pivotement de dossier de siège (17) est couplée en entraînement au mécanisme de réglage d'appui-tête, par l'intermédiaire d'une transmission mécanique (en 20, 21, 22).

15. Appui-tête selon la revendication 14, **caractérisé par le fait que** la transmission mécanique contient un entraînement à courroie crantée en tant que moyen d'entraînement.

16. Appui-tête selon la revendication 14, **caractérisé par le fait que** la transmission mécanique contient un arbre flexible en tant que moyen d'entraînement.

17. Appui-tête selon la revendication 14, **caractérisé par le fait que** la liaison d'entraînement, entre la ferrure de pivotement d'appui-tête (17) et le mécanisme de réglage d'appui-tête (31), contient au moins une transmission à roue dentée (19, 22).

18. Appui-tête selon la revendication 17, **caractérisé par le fait que** la transmission à roue dentée (19, 22) présente une transmission à denture autobloquante.

19. Appui-tête selon la revendication 18, **caractérisé par le fait que** la transmission à denture autobloquante est formée par une transmission à vis.
